# Europäisches Patentamt

## European Patent Office

## Office européen des brevets

(19)

(11) Veröffentlichungsnummer: **0 100 820**
**B1**

(12) **EUROPÄISCHE PATENTSCHRIFT**

(45) Veröffentlichungstag der Patentschrift:
**03.02.88**

(21) Anmeldenummer: **83104473.0**

(22) Anmeldetag: **06.05.83**

(51) Int. Cl.⁴: **H 04 L 7/04**

(54) **Verfahren zur Synchronübertragung rahmenstrukturierter Daten.**

(30) Priorität: **10.08.82 DE 3229696**

(43) Veröffentlichungstag der Anmeldung:
**22.02.84 Patentblatt 84/8**

(45) Bekanntmachung des Hinweises auf die Patenterteilung:
**03.02.88 Patentblatt 88/5**

(84) Benannte Vertragsstaaten:
**CH DE FR GB IT LI NL SE**

(56) Entgegenhaltungen:
US-A-3 159 811
US-A-3 761 891

IBM TECHNICAL DISCLOSURE BULLETIN, Band 11, Nr. 11, April 1969, Seiten 1379-1380, New York, US; A.H. FREY: "Frame synchronization"
E.L. GRUENBERG: "Handbook of telemetry and remote control", 1967, Seiten 8-36 bis 8-37, Kapitel 8, "PCM telemetry systems", McGraw-Hill, Inc., New York, US;

(73) Patentinhaber: **ANT Nachrichtentechnik GmbH, Gerberstrasse 33, D-7150 Backnang (DE)**

(72) Erfinder: **de Sanctis, Massimo, Dot., Ing., Hohenstaufenstrasse 9, D-7153 Weissach im Tal (DE)**

EP 0 100 820 B1

## Beschreibung

Die Erfindung betrifft eine Schaltungsonordnung zur Synchronübertragung von seriellen in einen Rahmen strukturierten digitalen Daten gemäß Oberbegriff des Patentanspruchs 1.

Bei der Übertragung von Daten aus mehreren Quellen oder von Daten, die von einer Quelle blockweise geordnet abgegeben werden, wie z. B. von einem Analog-Digital-Wandler, ist es notwendig, einen Rahmen zu bilden, in dem den einzelnen Bits jeweils eine feste Position zugeordnet wird.

Dabei gibt es zwei Übertragungsverfahren, wobei im ersten zum Zwecke der Rahmensynchronisatian ein zweiter Kanal verwendet wird. Das zweite Verfahren kennzeichnet den Rahmenanfang mit Hilfe eines festen Rahmenkennungswortes.

Bei beiden Verfahren ist nachteilig, daß wegen der Synchronisation eine höhere Kanalkapazität zur Verfügung gestellt werden muß, also zur Übertragung der Nettoinformation erforderlich wäre.

Der vorliegenden Erfindung lag die Aufgabe zugrunde, eine unaufwendige Schaltungsanordnung der eingangs genannten Art anzugeben, die unter Beibehaltung der Synchronisationsmöglichkeit eine geringe Kanalkapazität benötigt.

Die Lösung erfolgt mit den im Hauptanspruch angegebenen Mitteln.

Durch den Aufsatz "Frame Synchronization" von Frey in IBM Technical Disclosure Bulletin, Band 11, Nr. 11, April 1969, Seiten 1379-1380, ist ein Fehler-Korrektur-System mit einem aus mehreren Zeilen und Spalten bestehenden Matrix-Rahmen angegeben, wobei die Bits spaltenweise seriell übertragen werden und die Redundanzbits so codiert werden, daß beispielsweise mit steigender Zeilenadresse ein numerisch ansteigender Rest entsteht, so daß auf diese Weise auf der Empfängerseite synchronisiert werden kann. Eine Schaltung ist der Literaturstelle nicht zu entnehmen.

In der US-PS- 3 159 811 ist die Synchronisation mittels Paritätsbit bei Puls-Code-Systemen beschrieben, und es ist auch ein Blockschaltbild für ein selbstsynchronisierendes Decoder-System mit 1 Paritäts-Bit pro Codewort zu entnehmen.

Aus der US-PS- 3 761 891 ist eine Schaltkreisanordnung zur Synchronisation von Sendern und Empfängern in Dater-Übertragungssystemen bekanntgeworden, wobei ebenfalls Paritätsbits verwendet werden.

Die erfindungsgemäße Schaltungsanordnung ist bezüglich Aufwand besonders günstig und weist eine gute Kanalausnutzung auf, wobei die Synchronisationsfähigkeit in keiner Weise eingeschränkt wird.

Besonders günstig wird die Anwendung der Anordnung bei Übertragungen von Daten mit Envelope-Strukturen, die 6 oder 8 Informationsbit, ein Signalisierungsbit und ein alternierendes Bit zur Synchronisation vorsehen. Vorteilhafterweise wird dabei statt des alternierenden Bits ein Fehlerschutzbit eingesetzt, welches in Doppelausnutzung ebenfalls als Synchronisationsbit verwendet wird.

In vorteilhafter Weise kann die erfindungsgemäße Schaltung auch bei PCM-Übertragungen angewendet werden, wobei das Rahmenkennungswort ein festes Muster aus einer bestimmten Anzahl von Bits ist. Statt dieses Rahmenkennungswortes wird an dessen Stelle die gleiche Anzahl von Fehlerschutzbits übertragen, die gleichzeitig neben der Synchronisation die Korrektur der PCM-Daten ermöglichen.

Ebenfalls vorteilhaft ist die Verwendung bei digitalisierten Tonrundfunksignalen, die in einem Zeitmultiplex-Rahmen zusammengefaßt sind, wobei der Fehlerschutzanteil aus einem Fehlerverdeckungsbit pro Abtastwert besteht und wobei zur Synchronisation und zur Fehlerverdeckung allein dieses Bit ausgenutzt wird.

Es folgt nun die Beschreibung der Erfindung anhand der Figuren.

Die Figur 1 zeigt ein Blockschaltbild für ein Ausführungsbeispiel einer Schaltungsanordnung zur Durchführung des Verfahrens.

Die Figur 2 zeigt zwei Beispiele für den Rahmenaufbau sowie den zeitlichen Verlauf des Blocktaktes hierfür.

Die Fig. 3 zeigt ein Beispiel für die Realisierung des sendeseitigen und des empfangsseitigen Schalters.

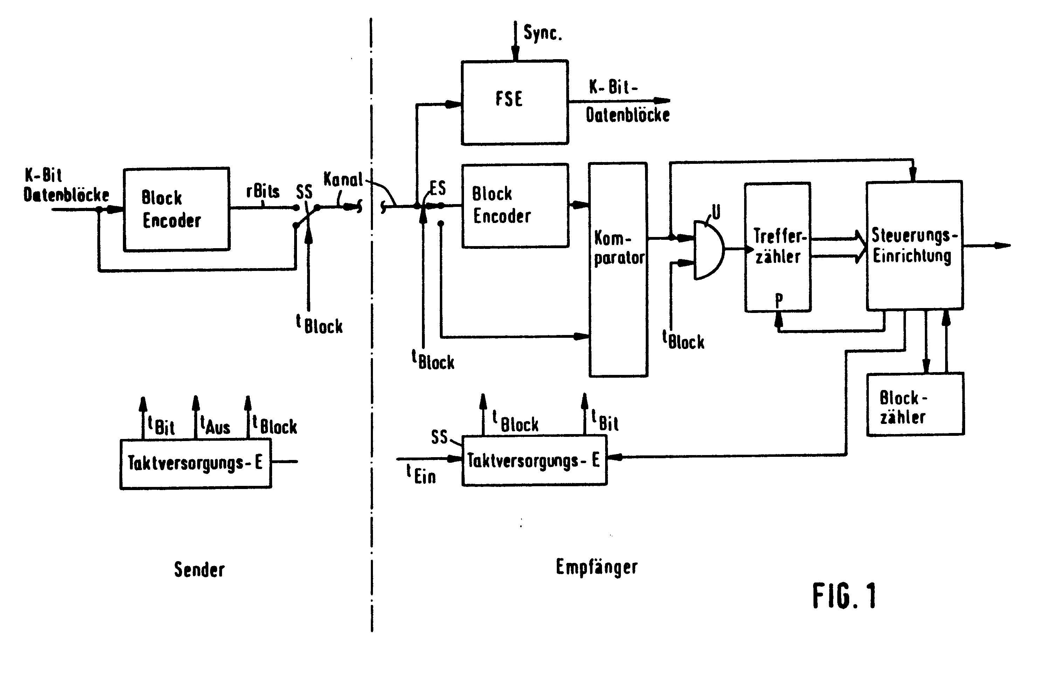

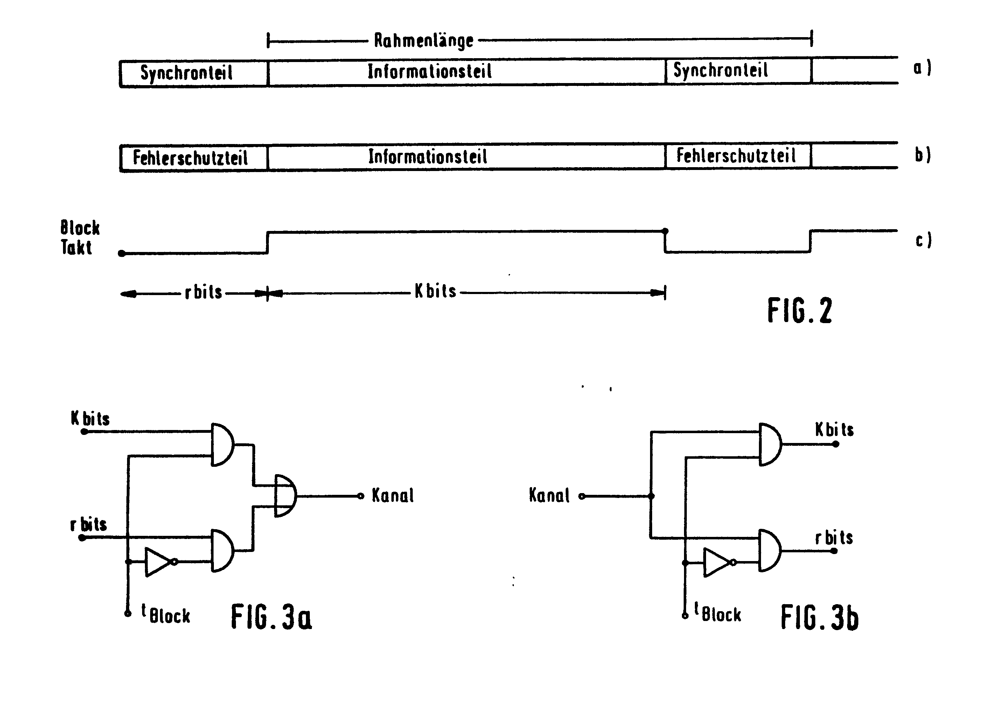

Auf der Fig. 1 ist linksseitig die sendeseitige Anordnung und rechtsseitig die empfangsseitige Anordnung erkennbar. Sender und Empfänger sind durch den Übertragungskanal miteinander verbunden. Auf der Sendeseite ist ein Blockencoder, der vorteilhafterweise systematisch ist, sowie ein sendeseitiger Multiplexer-Schalter SS vorgesehen, durch den in der einen Stellung Informationsbits und in der anderen Stellung die Fehlerschutzbits übertragen werden. Der Schalter ist von einem Blocktakt t block gesteuert, der von einer Taktversorgungsanordnung zusammen mit einem Bittakt für die Information und einem Sendebittakt taus geliefert wird. In der einen Stellung dieses Multiplexschalters SS werden k Informationsbits hintereinander gesendet, woran sich die r Fehlerschutzbits anschließen. Dieser Verlauf ist der Fig. 2c zu entnehmen.

Auf der rechten Seite, der Empfängerseite der Übertragungsanordnung, ist ein empfangsseitiger Demultiplexer-Schalter ES, ein weiterer Blockencoder, der dem sendeseitigen Blockencoder gleicht, ein Komparator, ein Treffer-Zähler, eine Steuerungseinrichtung, ein Blockzähler und eine Taktversorgung erkennbar. Der über den Kanal empfangene serielle Bitstrom wird durch den Demultiplexerschalter ES, der durch den Blocktaktblock gesteuert ist in k und r Bits aufgeteilt, wobei dem Blockencoder k Bits zur Verfügung gestellt werden zur Erzeugung von r zugeordneten Fehlerschutzbits. Durch den nachfolgenden Komparator werden diese vom Blockencoder erzeugten r Bits mit den direkt empfangenen, den k Bits nachfolgenden Bits, verglichen, wobei der Vergleich in vorteilhafter Weise bitweise seriell erfolgt. Der Ausgang des Komparators ist über ein UND-Glied U, welches vom Blocktakt tblock getaktet wird, mit dem Takteingang des Treffer-Zählers verbunden. Im Falle der Übereinstimmung von den durch den Blockencoder erzeugten r Bits mit den direkt empfangenen r Bits wird der Komparatorausgang 1, so daß mit dem nächsten Blocktaktimpuls das UND-Glied U leitend gesteuert wird und der Treffer-Zähler imkrementiert wird. Durch den Blockzähler werden die empfangenen Blöcke modulo t gezählt. Nach Empfang von t Blöcken wird von der Steuerungseinrichtung veranlaßt, zu prüfen, ob der Treffer-Zählerstand größer oder gleich einer Schwelle s bzw. kleiner ist. Im Falle der Nichtsynchronisation werden bei Nichterreichen der Schwelle s der Treffer-Zähler von der Steuerungseinrichtung auf einen einstellbaren Anfangswert zurückgesetzt (Preseteingang) und der Blocktakt um 1 Bittakt verzögert. Dies erfolgt am günstigsten durch Zurücksetzen des in der Taktversorgung erzeugten Blocktaktes $t_{Block}$ über deren Preseteingang. Durch die 1-Bit-Verzögerung des Blocktaktes wird das Fenster, durch das der seriell ankommende Bitstrom in Blöcke der Länge k+r geteilt wird, um 1 Bit verschoben, so daß nunmehr die um eine Bitposition versetzte Gruppe von r Bit als Zählerschutzbits untersucht wird.

Wird dagegen die Schwelle s durch die Treffer-Zahl in ununterbrochener Reihenfolge m-mal hintereinander erreicht, so werden von der Steuerungseinrichtung die an dem Blockencodereingang anstehenden k-Bit-Datenblöcke als synchronisiert erkannt.

Befindet sich die Empfangseinrichtung in Synchronisation und wird in ununterbrochener Reihenfolge l-mal die Schwelle s nicht erreicht, so gelten die genannten Datenblöcke nicht mehr als synchronisiert.

Die Erfindung geht von der Erkenntnis aus, daß im Synchronisationsfalle die Anzahl der Treffer proportional zur Kanalgüte eingeht, oder umgekehrt ausgedrückt, daß die Anzahl der Nichttreffer der Bitfehlerrate des Kanals entspricht. Im Nichtsynchronismusfall ist die Wahrscheinlichkeit dafür, daß die im Blockencoder erzeugten r Fehlerschutzbits mit den empfangenen r Bits übereinstimmen, gleich $1:2^r$, d.h., daß, je größer r ist, die Wahrscheinlichkeit für eine falsche Synchronisation erheblich sinkt. Aus dieser Erkenntnis heraus kann eine schnellere Synchronisation dadurch erreicht werden, daß sofort nach Erkennen eines nicht übereinstimmenden Bits im Komparator die Bittaktverschiebung eingeleitet wird.

Die Auswahl einer günstigen Schwelle ist jeweils abhängig von den Werten k und r. Um die Wahrscheinlichkeit der Synchronisationsaussage zu erhöhen, wird die Überwachung von mehreren t Blöcken abgewartet, bevor eine Entscheidung gefällt wird. Die Werte für m und I sind jeweils abhängig von der Bitfehlerrate des betreffenden Kanals zu wählen.

Um eine schnellere Synchronisation zu erzielen, wird die Blocktaktverschiebung um einen Bittakt schon nach einer erkannten Nichtübereinstimmung zweier entsprechender r Bits im Komparator durchgeführt.

In der Fig. 1 ist weiterhin eine Fehlerschutzeinrichtung FSE zu erkennen, die im Synchronismusfall von der Steuerungseinrichtung mittels eines Synchronsignals SYNC gesteuert wird, den ankommenden Bitstrom zu korrigieren und die Information in Form von k-Bit-Datenblöcken bereitzustellen.

Die Figur 1 enthält weiterhin eine Taktversorgungseinrichtung, die durch den vom empfangenen Bitstrom abgeleiteten Bittakt tein gesteuert und die übrigen Takte Blocktakt tblock und Bittakt tbit für die Überwachungsanordnung erzeugt und bereitstellt und die von der Steuerungseinrichtung angesteuert wird.

Die Fig. 2 zeigt unter a und b zwei Rahmen mit Informationsteil und Synchron- bzw. Fehlerschutzteilen. In der Teilfigur c ist der zugehörige Blocktakt mit k Bits bzw. r Bits dargestellt.

In Fig. 3a bzw. b sind Ausführungsbeispiele für den Multiplexer- SS bzw. Demultiplexer-Schalter ES dargestellt. In Fig. 3a erlaubt der Blocktakt tblock über 2 UND-Glieder und ein ODER-Glied bzw. zusätzlich über einen Inverter die alternierende Durchleitung einerseits der k Bits und andererseits der r Bits auf den Kanal, wobei jedoch aufgrund der höheren Kanalbitrate gegenüber der Bitrate der ankommenden k-Bit-Information ein Zwischenspeicher erforderlich ist, der jedoch weder in Fig. 3a, 3b noch in Fig. 1 gezeichnet wurde. Die Fig. 3b zeigt den in entsprechend inverser Weise operierenden Demultiplexer-Schalter ES in einem Ausführungsbeispiel, das zwei UND-Glieder und einen Inverter enthält, wobei aus dem ankommenden Kanal-Bitstrom, durch den Blocktakt tblock gesteuert, an den Ausgängen der nicht näher bezeichneten UND-Glieder einmal die k-Bits und zum anderen die r-Bits entstehen.

## Patentansprüche

1. Schaltungsanordnung zur Synchronübertragung von seriellen, in einem Rahmen strukturierten, digitalen Daten, wobei der Rahmen neben dem Datenanteil einen Synchronisationsanteil oder zusätzlich einen Fehlerschutzanteil aufweist, wobei der zusätzliche Fehlerschutzanteil in Doppelausnutzung auch zur Synchronisation und/oder der Synchronisationsanteil in Doppelausnutzung auch zum Fehlerschutz ausgewertet wird, dadurch gekennzeichnet, daß auf der Sendeseite ein erster Blockencoder vorgesehen ist, der zu jeweils k bit Information eines Blockes den Fehlerschutzanteil von r redundanten Bits erzeugt, daß ein erster Schalter (SS) vorgesehen ist, durch den mittels Umschalten zwischen Blockencoder-Ein- und A usgang ein Bitstrom mit alternierendem Daten- und Fehlerschutzanteil gesendet wird, daß auf der Empfangsseite ein zweiter Schalter (ES), ein zweiter gleicher Blockencoder, ein Komparator, ein Treffer-Zähler und eine Steuerungseinrichtung vorgesehen sind, daß durch den zweiten Schalter (ES) mittels Umschalten zwischen Blockencoder- und Komparator-Eingang der empfangene Bitstrom in k und r Bits derart unterteilt wird, daß dem zweiten Blockencoder die k Bits und dem Komparator die r Bits zugeführt werden, daß durch den Blockencoder an seinem Ausgang ein Fehlerschutzanteil von r Bits erzeugt wird, daß der Blockencoder-Ausgang mit einem zweiten Eingang des Komparators verbunden ist, daß durch den Komparator die empfangenen r Bits mit den erzeugten r Bits verglichen werden, daß der Ausgang des Komparators mit dem Takteingang des Treffer-Zählers verbunden ist, daß die Ausgänge des Treffer-Zählers und sein Reset- oder Preset-Eingang mit der Steuerungseinrichtung verbunden sind und daß der zweite Schalter (ES) durch die Steuereinrichtung steuerbar ist.

2. Schaltungsanordnung nach Anspruch 1, dadurch gekennzeichnet, daß der Komparator ein Exklusiv-ODER-Glied und einen r-Bit-Zähler enthält, wobei durch das Exklusiv-ODER-Glied die beiden r-Bit-Ströme bitweise seriell miteinander verglichen werden und wobei durch den r-Bit-Zähler die Bittreffer gezählt werden.

3. Schaltungsanordnung nach Anspruch 1 oder 2, dadurch gekennzeichnet, daß zwischen Komparatorausgang und Takteingang des Treffer-Zählers ein UND-Glied vorgesehen ist, durch das im Falle der Gleichheit der beiden r-Bit der Treffer-Zähler inkrementiert wird.

4. Schaltungsanordnung nach Anspruch 1, 2 oder 3, dadurch gekennzeichnet, daß die Steuerungseinrichtung einen weiteren modulo t zählenden Zähler (Blockzähler) enthält, daß nach t Blöcken der Stand des Treffer-Zählers auf $\geqslant$ s bzw. < s untersucht wird, daß im Falle der Nichtsynchronisation beim Nichterreichen der Schwelle s der Treffer-Zähler in seine Ausgangsstellung zurückgesetzt (D) und der neue Blocktakt (t Block) der um ein Bit verzägerte alte Blocktakt wird, daß nach m-maligem ununterbrochenem Erreichen der Schwelle s die an dem Eingang des Blockencoders anstehenden k-Bit-Blöcke als synchronisiert gelten und daß im Falle der Synchronisation bei l-maligem, ununterbrochenem Nichterreichen der Schwelle s diese k-Bit-Blöcke nicht mehr als synchronisiert gelten.

## Claims

1. Circuit arrangement for the synchronous transmission of serial digital data structured in a frame, wherein the frame apart from the data component displays a synchronising component or additionally an error protection component, wherein the additional error protection component is evaluated in double utilisation also for synchronisation and/or the synchronising component is evaluated in double utilisation also for error protection, characterised thereby, that a first block encoder is provided at the transmitting end and generates the error protection component of r redundant bits for each k bit information of a block, that a first switch (SS) is provided, through which a bit stream with alternating data component and error protection component is transmitted by means of switching over between input and output of the block encoder, that a second switch (ES), a second like block encoder, a comparator, a hit counter and a control equipment are provided at the receiving end, that the received bit stream is subdivided through the second switch (ES) into k and r bits in such a manner by means of switching-over between input of the block encoder and input of the comparator that the k bits are fed to the second block encoder and the r bits are fed to the comparator, that an error protection component of r-bits is generated by the block encoder at its output, that the block encoder output is connected with a second input of the comparator, that the received r-bits are compared through the comparator with the generated r-bits, that the output of the comparator is connected with the timing input of the hit counter, that the outputs of the hit counter and its reset or preset input are connected with the control equipment and that the second switch (ES) is controllable by the control equipment.

2. Circuit arrangement according to claim 1, characterised thereby, that the comparator contains an exclusive-OR member and an r-bit counter, wherein both the r-bit streams are compared each with the other serially bit by bit through the exclusive-OR member and wherein the bit hits are counted by the r-bit counter.

3. Circuit arrangement according to claim 1 or 2, characterised thereby, that an AND member, through which the hit counter is incremented in the case of the equality of both the r-bits, is provided between comparator output and timing input of the hit counter.

4. Circuit arrangement according to claim 1, 2 or 3, characterised thereby, that the control equipment contains a further counter (block counter) counting modulo t, that the state of the hit counter is examined for $\geqslant$ s or < s after t blocks, that the hit counter is reset (D) into its initial position and the new block timing (t block) becomes the old block timing delayed by one bit in the case of non-synchronisation on non-attainment of the threshold s, that the k-bit blocks present at the input of the block encoder are accepted as synchronised after m uninterrupted attainments of the threshold s and that, in the case of the synchronisation, these k-bit blocks are no longer accepted as synchronised in the case of l uninterrupted non-attainments of the threshold s.

**Revendications**

1. Montage pour la transmission synchrone de données numériques sérielles, structurées dans une trame, la trame contenant, outre la fraction données, une fraction synchronisation ou une fraction supplémentaire de protection contre les erreurs, la fraction supplémentaire de protection contre les erreurs étant utilisée aussi pour la synchronisation dans une exploitation en double et/ou la fraction synchronisation étant utilisée aussi pour la protection contre les erreurs dans une exploitation en double, caractérisé en ce qu'un premier codeur de blocs est prévu côté émission pour générer la fraction de protection contre les erreurs de r bits redondants pour chaque fois k bits d'information d'un bloc, qu'un premier commutateur (SS) est prévu pour émettre un flux de bits à alternance de fraction données et fraction de protection contre les erreurs, par commutation entre l'entrée et la sortie du codeur de blocs, qu'un second commutateur (ES), un second codeur de blocs identique, un comparateur, un compteur de coïncidences et un dispositif de commande sont prévus côté réception, que le second commutateur (ES), par commutation entre l'entrée du codeur de blocs et l'entrée du comparateur, partage le flux de bits reçus en k bits et en r bits, que les k bits sont envoyés au second codeur de blocs et les r bits au comparateur, que le codeur de blocs génére à sa sortie une fraction de protection contre les erreurs de r bits, que la sortie du codeur de blocs est reliée à une seconde entrée du comparateur, que le comparateur compare les r bits reçus avec les r bits générés, que la sortie du comparateur est reliée à l'entrée de rythme du compteur de coïncidences, que les sorties du compteur de coïncidences et son entrée de remise à 0 ou de présélection sont reliées au dispositif de commande et que le second commutateur (ES) peut être commandé par le dispositif de commande.

2. Montage selon la revendication 1, caractérisé en ce que le comparateur contient un élément OU exclusif et un compteur de r bits, l'élément OU exclusif comparant les deux flux de r bits en série, bit par bit, et le compteur de r bits comptant les coïncidences de bits.

3. Montage selon la revendication 1 ou 2, caractérisé par la prévision, entre la sortie du comparateur et l'entrée de rythme du compteur de coïncidences, d'un élément ET qui, en cas d'égalité des deux r bits, fait avancer le compteur de coïncidences.

4. Montage selon la revendication 1, 2 ou 3, caractérisé en ce que le dispositif de commande contient un autre compteur (compteur de blocs), comptant modulo t, que la position du compteur de coïncidences est examinée après t blocs, pour vérifier si cette position est supérieure à égale à un seuil s ou au contraire inférieure à ce seuil s, que dans le cas de non-synchronisation, lorsque le seuil s n'est pas atteint, le compteur de coïncidences est remis (D) à sa position de départ et le nouveau signal de rythme de blocs ($t_{block}$) devient l'ancien signal de rythme de blocs retardé d'un bit, que lorsque le seuil s a été atteint sans interruption m fois de suite, les blocs de k bits présentés à l'entrée du codeur de blocs sont considérés comme étant synchronisés et que, en cas de synchronisation, lorsque le seuil s n'est pas atteint l fois de suite, sans interruption, ces blocs de k bits sont considérés comme n'étant plus synchronisés.

FIG. 1

Sender

Empfänger

0 100 820

0 100 820

Rahmenlänge

| Synchronteil | Informationsteil | Synchronteil | | a) |

| Fehlerschutzteil | Informationsteil | Fehlerschutzteil | | b) |

Block Takt

c)

r bits

K bits

**FIG. 2**

K bits

r bits

Kanal

$t_{Block}$

**FIG. 3a**

Kanal

K bits

r bits

$t_{Block}$

**FIG. 3b**